# EUROPEAN PATENT SPECIFICATION

(11) **EP 4 006 177 B1**
(45) Date of publication and mention of the grant of the patent: **28.02.2024**
(21) Application number: 20843311.0
(22) Date of filing: 17.07.2020
(51) Int. Cl.: C21D 8/10, C21C 7/00, C21C 7/10, C22C 38/02, C22C 38/50, C22C 38/44, C22C 38/06, C22C 38/04, C21D 9/08, C21D 1/18, C22C 38/00, C22C 38/42, C22C 38/46, C22C 38/48, C22C 38/52, C21D 6/00, F16L 9/02, F16L 58/00

(54) **MARTENSITIC STAINLESS STEEL PIPE AND METHOD OF MANUFACTURING MARTENSITIC STAINLESS STEEL PIPE**
ROHR AUS MARTENSITISCHEM EDELSTAHL UND VERFAHREN ZUR HERSTELLUNG EINES ROHRS AUS MARTENSITISCHEM EDELSTAHL
TUYAU EN ACIER INOXYDABLE MARTENSITIQUE ET PROCÉDÉ DE FABRICATION DE TUYAU EN ACIER INOXYDABLE MARTENSITIQUE

(30) Priority: 24.07.2019 JP 2019136192
(43) Date of publication of application: 01.06.2022
(73) Proprietor: NIPPON STEEL CORPORATION, Chiyoda-ku Tokyo 100-8071 (JP)
(72) Inventor: TOMIO, Yusaku, Tokyo 100-8071 (JP); SAGARA, Masayuki, Tokyo 100-8071 (JP); AMAYA, Hisashi, Tokyo 100-8071 (JP); NOGUCHI, Mikiko, Tokyo 100-8071 (JP)
(74) Representative: J A Kemp LLP
(86) International application number: PCT/JP2020/027941
(87) International publication number: WO 2021/015141

(56) References cited:
- EP-A1- 1 826 285
- EP-A1- 3 110 984
- EP-A1- 3 342 894
- EP-B1- 3 110 984
- WO-A1-2018/074405
- WO-A1-2018/147149
- WO-A1-2018/181404
- WO-A1-2019/065116
- WO-A1-2019/065116
- JP-A- 2002 220 639
- JP-A- 2002 226 947
- JP-A- 2016 164 288

## Description

### TECHNICAL FIELD

The present invention relates to a martensitic stainless steel pipe and a method of manufacturing a martensitic stainless steel pipe.

### BACKGROUND ART

Petroleum and natural gas produced in oil and gas wells contain associated gases, i.e., corrosive gases such as CO₂ and hydrogen sulfide. A martensitic stainless steel pipe containing Cr in about 13 mass % (hereinafter referred to as "13 % Cr-steel pipe") has an excellent balance between corrosion resistance and economy, and is widely used as a steel pipe for oil wells or a steel pipe for line pipe, for example (see, for example, JP 2015-161010 A, JP 2006-144069 A, or JP 2010-242162 A).

It is known that, when 13 % Cr-steel pipes are welded together prior to use, stress-corrosion cracking (SCC) susceptibility increases at weld heat-affected zones (HAZs). This is presumably because welding thermal cycles cause Cr carbides to precipitate along the grain boundaries such that a Cr-depleted layer forms (see, for example, WO 2005/023478). It is known that a post-weld heat treatment (PWHT) can remove such a Cr-depleted layer to achieve recovery (see, for example, JP Hei11(1999)-343519).

EP 3,342,894 discloses a stainless steel pipe having a strength in a predetermined range and a low yield ratio is to be provided. A stainless steel pipe has a chemical composition of, in mass%: C: up to 0.02 %; Si: 0.05 to 1.00 %; Mn: 0.1 to 1.0 %; P: up to 0.030 %; S: up to 0.002 %; Ni: 5.5 to 8 %; Cr: 10 to 14 %; Mo: 2 to 4 %; V: 0.01 to 0.10 %; Ti: 0.05 to 0.3 %; Nb: up to 0.1 %; Al: 0.001 to 0.1 %; N: up to 0.05 %; Cu: up to 0.5 %; Ca: 0 to 0.008 %; Mg: 0 to 0.05 %; B: 0 to 0.005 %; and balance Fe and impurities, the stainless steel pipe having a microstructure including martensite and, by volume fraction, 12 to 18 % retained austenite. The martensite has prior austenite grains of a crystal grain size number lower than 8.0 in accordance with ASTM E112. The stainless steel pipe has a yield strength of 550 to 700 MPa.

EP 3,110,984 discloses a martensitic-ferritic stainless steel with high corrosion resistance that comprises the following chemical composition: C: from 5 0.005 to 0.030%; Si: from 0.10 to 0.40%; Mn from 0.20 to 0.80%; P: 0.020% max; S: 0.005% max; Cr: from 13 to 15%; Ni: from 4.0 to 6.0%; Mo: from 2.0 to 4.5%; V: from 0.01 to 0.10%; Nb: from 0.01 to 0.50%; N: from 0.001 to 0.070%; Al: from 0.001 to 0.060%; Ti: from 0.001 to 0.050%; Cu: from 0.01 to 1.50%; O: 0.005% max (all in weight percent), wherein the balance is performed by Fe and unavoidable impurities.

EP 1,826,285 discloses a martensitic stainless steel according to the invention contains, by mass, 0.001% to 0.01% C, at most 0.5% Si, 0.1% to 3.0% Mn, at most 0.04% P, at most 0.01% S, 10% to 15% Cr, 4% to 8% Ni, 2.8% to 5.0% Mo, 0.001% to 0.10% Al, at most 0.07% N, 0% to 0.25% Ti, 0% to 0.25% V, 0% to 0.25% Nb, 0% to 0.25% Zr, 0% to 1.0% Cu, 0% to 0.005% Ca, 0% to 0.005% Mg, 0% to 0.005% La, and 0% to 0.005% Ce, with the balance being Fe and impurities.

WO 2019/065116 discloses an oil well pipe martensitic stainless seamless steel pipe that has high strength and excellent sulfide stress cracking resistance; and a production method for the oil well pipe martensitic stainless seamless steel pipe. An oil well pipe martensitic stainless seamless steel pipe that: has a composition that contains, by mass, 0.0010%-0.0094% of C, no more than 0.5% of Si, 0.05%-0.5% of Mn, no more than 0.030% of P, no more than 0.005% of S, 4.6%-7.3% of Ni, 10.0%-14.5% of Cr, 1.0%-2.7% of Mo, no more than 0.1% of Al, no more than 0.2% of V, no more than 0.1% of N, 0.01%-0.50% of Ti, 0.01%-1.0% of Cu, and 0.01%-1.0% of Co and that satisfies a prescribed relational expression for C, Mn, Cr, Cu, Ni, Mo, W, Nb, N, and Ti, the remainder being Fe and unavoidable impurities; and has a yield stress of at least 758 MPa.

WO 2018/147149 discloses a ferritic stainless steel which exhibits excellent corrosion resistance and can further improve the corrosion resistance of a weld bead part if butt welding with SUS304 is carried out. The ferritic stainless steel sheet contains, in terms of mass %, 0.020% or less of C, 0.05-1.00% of Si, 0.05-1.00% of Mn, 0.040% or less of P, 0.030% or less of S, 0.001-0.150% of Al, 20.0-23.0% of Cr, 1.60-3.00% of Ni, 0.40-1.00% of Nb and 0.020% or less of N, with the remainder comprising Fe and unavoidable impurities.

### DISCLOSURE OF INVENTION

However, an investigation by the present inventors revealed that a steel pipe that has been subjected to PWHT does not always achieve sufficient SCC resistance for an environment at a high temperature of about 80 to 200 °C and containing chloride ions and CO₂ (hereinafter also referred to as "high-temperature/CO₂ environment").

An object of the present invention is to provide a martensitic stainless steel pipe that can reduce the increase in SCC susceptibility occurring at HAZs after welding, and a method of manufacturing such a steel pipe.

The present invention is defined in the claims.

The present invention provides a martensitic stainless steel pipe that can reduce the increase in SCC susceptibility occurring at HAZs after welding.

### BRIEF DESCRIPTION OF THE DRAWINGS

[FIG. 1] FIG. 1 shows a photoelectron spectrum of Cr 2p3/2 obtained from a surface of a commercial SUS304 stainless steel plate, where the background has been removed and then the spectrum has been divided into a metal component and an oxide component.
[FIG. 2] FIG. 2 shows a photoelectron spectrum of Fe 2p3/2 obtained from a surface of a commercial SUS304 stainless steel plate, where the background has been removed and then the spectrum has been divided into a metal component and an oxide component.
[FIG. 3] FIG. 3 is a flow chart showing a method of manufacturing a martensitic stainless steel pipe according to an embodiment of the present invention.
[FIG. 4] FIG. 4 is a flow chart that more specifically shows the steelmaking step of FIG. 3.
[FIG. 5] FIG. 5 is a flow chart that more specifically shows the heat treatment step of FIG. 3.
[FIG. 6] FIG. 6 is a flow chart that more specifically shows the surface treatment step of FIG. 3.

### EMBODIMENTS FOR CARRYING OUT THE INVENTION

The inventors attempted to find a way to reduce the increase in SCC susceptibility occurring at HAZs after welding of 13 % Cr-steel pipes, and obtained the following findings.
(1) Typically, a 13 % Cr-steel pipe is produced through heat treatments such as quenching and tempering; Cr may be captured by oxide scales formed during heat treatment, which may reduce Cr concentration at and near the surface (this phenomenon will be hereinafter referred to as "dechromation"). The degree (i.e., depth) of dechromation can be evaluated by, for example, performing sputtering on the surface of a martensitic stainless steel pipe and, at the same time, measuring Cr concentration along the depth direction using X-ray photoelectron spectroscopic (XPS) analysis. If dechromation is insignificant (i.e., dechromation is shallow), a position about 100 nm away from the surface, for example, can exhibit an Cr concentration similar to that of the base material; on the other hand, if dechromation is significant (i.e., dechromation is deep), even a position 2000 nm away from the surface, for example, may have a lower Cr concentration than the base material.
   It has traditionally been thought that dechromation due to oxide scales formed during heat treatment is unrelated to the increase in SCC susceptibility occurring at HAZs after welding of 13 % Cr-steel pipes. For example, WO 2005/023478, mentioned above, at page 5, lines 17 to 18, states: "it is assumed that a mill-scale Cr-depleted layer accompanying the production of mill scales is not directly related to SCC occurring at weld heat-affected zones". However, an investigation by the present inventors revealed that a martensitic stainless steel pipe in which dechromation has occurred can develop a Cr-depleted layer more easily during welding, and sufficient SCC resistance for a high-temperature/CO₂ environment may not be obtained even if PWHT has been performed.
(2) The depth of dechromation is correlated with the ratio between Cr-O and Fe-O in oxide components at the outermost surface. Specifically, the deeper dechromation, the lower the ratio of Cr-O to Fe-O at the outermost surface. Thus, by measuring the ratio between Cr-O and Fe-O at the outermost surface, the depth of dechromation can be evaluated quickly and quantitatively. To produce the effects of PWHT, the atomic concentration ratio of Cr oxides to Fe oxides obtained by XPS analysis against the surface of the martensitic stainless steel pipe prior to welding, Cr-O/Fe-O, must be 0.30 or higher.
(3) An effective way to keep dechromation shallow is to remove oxide scales on the martensitic stainless steel pipe after heat treatment and, thereafter, process the surface with acids to concentrate Cr. For example, a martensitic stainless steel pipe after heat treatment may be pickled with sulfuric acid to remove oxide scales and, thereafter, pickled with nitric hydrofluoric acid to concentrate Cr at the surface such that the Cr-O/Fe-O ratio at the surface is 0.30 or higher.
(4) Further, to produce the effects of PWHT, appropriate amounts of Mo and Ti must be included in the martensitic stainless steel pipe. As discussed above, an increase in SCC susceptibility at HAZs is caused by Cr carbides precipitating along the grain boundaries and thus producing a Cr-depleted layer. If appropriate amounts of Mo and Ti are included in the martensitic stainless steel pipe, some of the Cr carbides are replaced by carbides of Mo and/or Ti, which reduce production of a Cr-depleted layer. A prerequisite for ensuring the SCC resistance effected by PWHT is that "the Cr-O/Fe-O ratio at the surface is 0.30 or higher", mentioned above.
(5) An additional requirement for minimizing the increase in SCC susceptibility occurring at HAZs after welding is to reduce alumina-based inclusions. Specifically, the number density of alumina-based inclusions having an equivalent circle diameter exceeding 1.0 µηι must be not higher than 50.0 inclusions/mm². If one of the following sub-steps A) and B) is performed as the secondary refining during a steelmaking step, the resulting number density of alumina-based inclusions having an equivalent circle diameter exceeding 1.0 µηι will be not higher than 50.0 inclusions/mm²:
   A) performing VOD, for 10 minutes or longer, to supply oxygen to the steel melt in a vacuum chamber with a pressure reduced to 10 torr or lower; and
   B) performing RH vacuum degassing, for 5 minutes or longer, to circulate the steel melt between a vacuum vessel with a pressure reduced to 10 torr or lower and a ladle.

Regarding finding (3) above, some documents directed to ferritic stainless steel teach removing scales through pickling halfway through the manufacturing process (for example, JP 2014-141735 A and WO 2018/147149). This is presumably because ferritic stainless steel is often used in kitchen utensils, a building's exterior or the like, and finished skin is considered important for product specifications. On the other hand, finished skin is not an essential requirement for martensitic stainless steel, particularly martensitic stainless steel pipe used for line pipe or in oil wells. While other applications of martensitic stainless steel include blades, they are ultimately polished prior to use, which means that pickling is not essential.

JP Heill(1999)-172475 A teaches that a stainless steel member being treated is pickled. This document is mainly directed to wire, and pickling is performed in order to, for example, improve esthetic appearance, prevent a wire break, and prevent a decrease in the life of wire-drawing dies. WO 2018/74405 teaches that Fe-Cr-Al-based stainless steel sheet and stainless foil are pickled, where the pickling occurs between annealing and cold rolling. The pickling steps of both documents are performed for different purposes from reduction in the increase in SCC susceptibility occurring at HAZs after welding.

JP 2007-56358 A states that, among others: (a) the dechromated portion must be dissolved and removed to improve corrosion resistance; (b) pickling with sulfuric acid dissolves iron and is very effective in dissolving and removing a dechromated portion; and (c) pickling with mixed acid is effective to form a firm passivation coating. However, since JP 2007-56358 A evaluates corrosion resistance using SUS430, which is a ferritic stainless steel, "improvement in corrosion resistance" as used in this document appears to mean improvement in the corrosion resistance to general corrosion. This is also proved by the fact that the Examples evaluate corrosion resistance using salt spray.

In general, SCC occurs in a material with high corrosion resistance against general corrosion. In other words, a material with a low corrosion resistance against general corrosion has a low susceptibility to SCC, which is non-uniform corrosion. This is because, in a material with a low corrosion resistance against general corrosion, pits that would present initiation points of cracks disappear due to corrosion of their surrounding areas before cracking progresses. Further, a way to improve corrosion resistance against general corrosion at temperatures relatively close to room temperature is not necessarily effective in improving SCC resistance for an environment at around 80 to 200 °C. The disclosure in JP 2007-56358 A is directed to improvement in corrosion resistance against general corrosion, and does not provide any suggestion about the problem of improving SCC resistance for a high-temperature/COz environment, and particularly reducing the increase in SCC susceptibility occurring at HAZs upon welding.

The martensitic stainless steel proposed herein contains Ni in order to stabilize austenite in a high temperature range. Further, it contains Mo to improve SCC resistance at high temperatures. Thus, the martensitic stainless steel proposed herein is not only different from ferritic stainless steels in microstructure, but also in chemical composition. Different microstructures and different chemical compositions mean different reactivities to pickling solution. Further, different heat-treatment conditions are applied, leading to formation of scales in different states and dechromation in different manners. For example, a ferritic stainless steel that has been subjected to solution treatment and a martensitic stainless steel that has been tempered are significantly different in terms of the form of alloying elements (i.e., dissolved or precipitated). Therefore, pickling conditions for one steel cannot be applied to the other without any modifications.

Further, in ferritic stainless steel, crystal grain diameter cannot be sufficiently reduced due to its metallurgical properties, making it difficult to provide levels of both strength and toughness required from a steel pipe for line pipe.

JP 2006-122951 A describes a method of manufacturing a stainless steel pipe where scales produced on the surface are removed by pickling. While the subject matter of this publication is not limited to any particular stainless steel, it is assumed to mainly have austenitic stainless steel and duplex stainless steel in mind; in fact, the Examples provide evaluation results for an austenitic stainless steel having Cr in 18 mass % and Ni in 8 mass %.

Scales produced on austenitic stainless steel and duplex stainless steel are different in nature from those for martensitic stainless steel. Austenitic stainless steel and duplex stainless steel have higher Cr contents than martensitic stainless steel; thin and dense scales mainly composed of Cr are produced in those steels. In austenitic stainless steel and duplex stainless steel, these dense scales can be partially peeled off (i.e., peeled off in a non-uniform manner) during rolling, for example, which can cause abnormal oxidation. On the other hand, in martensitic stainless steel, scales mainly composed of Fe are produced and become relatively thick during hot working; however, since these scales are porous, they can be easily peeled off during the process. Thus, martensitic stainless steel rarely suffers from the problem of partial peel-off of scales and resulting abnormal oxidation.

In austenitic stainless steel and duplex stainless steel, scales are produced at relatively high temperatures during hot working or solution treatment, for example (at 1000 to 1300 °C). On the other hand, in martensitic stainless steel, thick scales produced during hot working or quenching can be peeled off relatively easily during the process. The pickling in the method proposed herein removes relatively thin scales produced during tempering (normally occurring at a temperature not higher than the Ac₁ point).

Thus, martensitic stainless steel is different from austenitic stainless steel in terms of the microstructure and chemical composition of the base material, and, in addition, develop scales that are different in nature. Further, different heat-treatment conditions applied lead to different manners of dechromation. Therefore, pickling conditions for one steel cannot be applied to another without any modifications.

Another reason why pickling is performed on austenitic stainless steel and duplex stainless steel is that, generally, cold working is often performed on these steels after heat treatment and scales must be removed before the cold working. On the other hand, martensitic stainless steel, particularly martensitic stainless steel pipe used as steel pipe for line pipe, is usually not subjected to cold working after heat treatment.

For the reasons given above, even though martensitic stainless steel, ferritic stainless steel, austenitic stainless steel and duplex stainless steel are all categorized as stainless steel, they have significant differences and thus are recognized by a person skilled in the art as different materials. It cannot be said that a technique for any one of these steels can always be used for another.

The present invention was made based on these findings. A martensitic stainless steel pipe according to an embodiment of the present invention and a method for manufacturing such a steel pipe will now be described in detail.

### [Martensitic Stainless Steel Pipe]

### [Chemical Composition]

The martensitic stainless steel pipe according to the present embodiment has a chemical composition as described below. In the following description, "%" for the content of an element means "mass %".

### C: 0.001 to 0.050 %

Carbon (C) precipitates in the form of Cr carbides at HAZs during welding, which cause formation of a Cr-depleted layer. On the other hand, excessively limiting C content leads to increased manufacturing costs. In view of this, C content is to be 0.001 to 0.050 %. A lower limit for C content is preferably 0.005 %, and more preferably 0.008 %. An upper limit for C content is preferably 0.030 %, and more preferably 0.020 %.

### Si: 0.05 to 1.00 %

Silicon (Si) deoxidizes steel. On the other hand, an excessively high Si content decreases the toughness of steel. In view of this, Si content is to be 0.05 to 1.00 %. A lower limit for Si content is preferably 0.10 %, and more preferably 0.15 %. An upper limit for Si content is preferably 0.80 %, and more preferably 0.50 %.

### Mn: 0.05 to 1.00 %

Manganese (Mn) improves the strength of steel. On the other hand, an excessively high Mn content decreases the toughness of steel. In view of this, Mn content is to be 0.05 to 1.00 %. A lower limit for Mn content is preferably 0.10 %, and more preferably 0.20 %. An upper limit for Mn content is preferably 0.80 %, and more preferably 0.60 %.

### P: up to 0.030 %

Phosphorus (P) is an impurity. P decreases the SCC resistance of steel. In view of this, P content is to be not higher than 0.030 %. P content is preferably not higher than 0.025 %.

### S: up to 0.0020 %

Sulfur (S) is an impurity. S decreases the hot workability of steel. In view of this, S content is to be not higher than 0.0020 %.

### Cu: below 0.50 %

Copper (Cu) is an impurity. In view of this, Cu content is to be lower than 0.50 %. Cu content is preferably not higher than 0.10 %, and more preferably not higher than 0.08 %.

### Cr: 11.50 to below 14.00 %

Chromium (Cr) improves the CO₂ corrosion resistance of steel. On the other hand, an excessively high Cr content decreases the toughness and hot workability of steel. In view of this, Cr content is to be 11.50 to below 14.00 %. A lower limit for Cr content is preferably 12.00 %, and more preferably 12.50 %. An upper limit for Cr content is preferably 13.50 %, more preferably 13.20 %, yet more preferably 13.00 %, and still more preferably 12.80 %.

### Ni: above 5.00 to 7.00 %

Nickel (Ni) is an austenite-forming element, and is included to produce martensite in the microstructure of steel. Producing martensite in the microstructure provides levels of strength and toughness required from a steel pipe for line pipe. Further, in addition to its effect of producing martensite in the microstructure, Ni has the effect of increasing the toughness of steel. On the other hand, an excessively high Ni content increases retained austenite, which decreases the strength of steel. In view of this, Ni content is to be above 5.00 % to 7.00 %. A lower limit for Ni content is preferably 5.50 %, and more preferably 6.00 %. An upper limit for Ni content is preferably 6.80 %, and more preferably 6.60 %.

### Mo: above 1.00 to 3.00 %

Molybdenum (Mo) improves the sulfide stress-corrosion cracking resistance of steel. Further, Mo forms carbides during welding and prevents precipitation of Cr carbides, thus prevents formation of a Cr-depleted layer. On the other hand, an excessively high Mo content decreases the toughness of steel. In view of this, Mo content is above 1.00 % to 3.00 %. A lower limit for Mo content is preferably 1.50 %, and more preferably 1.80 %. An upper limit for Mo content is preferably 2.80 %, and more preferably 2.60 %.

### Ti: 0.02 to 0.50 %

Titanium (Ti) forms carbides during welding and prevents precipitation of Cr carbides, and thus prevents formation of a Cr-depleted layer. On the other hand, an excessively high Ti content decreases the toughness of steel. In view of this, Ti content is to be 0.02 to 0.50 %. A lower limit for Ti content is preferably 0.05 %, and more preferably 0.10 %. An upper limit for Ti content is preferably 0.40 %, and more preferably 0.30 %.

### Al: 0.001 to 0.100 %

Aluminum (Al) deoxidizes steel. On the other hand, an excessively high Al content decreases the toughness of steel. In view of this, Al content is to be 0.001 to 0.100 %. A lower limit for Al content is preferably 0.005 %, and more preferably 0.010 %. An upper limit for Al content is preferably 0.080 %, and more preferably 0.060 %. Al content as used herein means the content of acid-soluble Al (so-called Sol. Al).

### Ca: 0.0001 to 0.0040 %

Calcium (Ca) improves the hot workability of steel. On the other hand, an excessively high Ca content decreases the toughness of steel. In view of this, Ca content is to be 0.0001 to 0.0040 %. A lower limit for Ca content is preferably 0.0005 %, and more preferably 0.0008 %. An upper limit for Ca content is preferably 0.0035 %, and more preferably 0.0030 %.

### N: 0.0001 to below 0.0200 %

Nitrogen (N) forms nitrides and decreases the toughness of steel. On the other hand, excessively limiting N content leads to increased manufacturing costs. In view of this, N content is to be 0.0001 to below 0.0200 %. A lower limit for N content is preferably 0.0010 %, and more preferably 0.0020 %. An upper limit for N content is preferably 0.0100 %.

The balance of the chemical composition of the martensitic stainless steel pipe according to the present embodiment is Fe and impurities. Impurity as used herein means an element originating from ore or scrap used as raw material for steel or an element that has entered from the environment or the like during the manufacturing process.

In the chemical composition of the martensitic stainless steel pipe, some Fe may be replaced by one or more elements selected from the group consisting of V, Nb and Co. Every one of V, Nb and Co is an optional element. That is, the chemical composition of the martensitic stainless steel pipe may contain only one or more of V, Nb and Co, or contain none of them.

### V: 0 to 0.500 %

Vanadium (V) improves the strength of steel. This effect is produced if a small amount of V is contained. On the other hand, an excessively high V content decreases the toughness of steel. In view of this, V content is to be 0 to 0.500 %. A lower limit for V content is preferably 0.001 %, more preferably 0.005 %, and yet more preferably 0.010 %. An upper limit for V content is preferably 0.300 %, and more preferably 0.200 %.

### Nb: 0 to 0.500 %

Niobium (Nb) improves the strength of steel. This effect is produced if a small amount of Nb is contained. On the other hand, an excessively high Nb content decreases the toughness of steel. In view of this, Nb content is to be 0 to 0.500 %. A lower limit for Nb content is preferably 0.001 %, more preferably 0.005 %, yet more preferably 0.010 %, and still more preferably 0.020 %. An upper limit for Nb content is preferably 0.300 %, and more preferably 0.200 %.

### Co: 0 to 0.500 %

Cobalt (Co) is an austenite-forming element, and may be included to produce martensite in the microstructure of steel. This effect is produced if a small amount of Co is contained. On the other hand, an excessively high Co content decreases the strength of steel. In view of this, Co content is to be 0 to 0.500 %. A lower limit for Co content is preferably 0.001 %, more preferably 0.005 %, and yet more preferably 0.010 %. An upper limit for Co content is preferably 0.350 %, more preferably 0.300 %, and yet more preferably 0.280 %.

### [Microstructure]

The stainless steel pipe according to the present embodiment is a martensitic stainless steel pipe. The martensitic stainless steel pipe according to the present embodiment preferably has a microstructure with a volume fraction of martensite of 70 % or larger. Martensite as used herein includes tempered martensite.

The balance of the microstructure of the martensitic stainless steel pipe according to the present embodiment is mainly composed of retained austenite. The microstructure of the martensitic stainless steel pipe according to the present embodiment preferably has a volume fraction of ferrite no larger than 5 %.

### [Alumina-Based Inclusions]

In the martensitic stainless steel pipe according to the present embodiment, the number density of alumina-based inclusions having an equivalent circle diameter exceeding 1.0 µηι is not higher than 50.0 inclusions/mm². If the number density of alumina-based inclusions having an equivalent circle diameter exceeding 1.0 µηι is higher than 50.0 inclusions/mm², sufficient SCC resistance may not be obtained even if PWHT is performed. The number density of alumina-based inclusions having an equivalent circle diameter exceeding 1.0 µm is preferably not higher than 40.0 inclusions/mm², and more preferably not higher than 30.0 inclusions/mm².

"Alumina-based inclusions" as used in the present embodiment means inclusions with an Al content not lower than 20 mass % and an O content not lower than 20 mass %. Alumina-based inclusions of the present embodiment include, in addition to alumina, Al-Ca-based complex oxides, for example.

The number density of alumina-based inclusions is measured in the following manner: a test specimen to be observed is taken from a portion of a martensitic stainless steel pipe located in its middle as determined along the wall thickness, and embedded in resin. A plane containing the pipe axis (in the direction of rolling) and a radius (in the direction of the wall thickness) of the martensitic stainless steel pipe, which will serve as a plane to be observed, is polished. 10 fields of view are observed to determine the number density of inclusions. The area of each field of view is 36 mm².

More specifically, first, element concentration analysis (EDS point analysis) is conducted on each of the inclusions in a field of view to identity the type of the inclusion. Specifically, element concentration analysis is conducted with an accelerating voltage of 20 kV for N, O, Mg, Al, Si, P, S, Ca, Ti, Cr, Mn, Fe, Cu and Nb. Based on the obtained element concentrations, inclusions with an Al content not lower than 20 mass % and an O content not lower than 20 mass % are treated as alumina-based inclusions, and the number of alumina-based inclusions with an equivalent circle diameter exceeding 1.0 µηι is counted. Inclusions with an equivalent circle diameter not higher than 1.0 µm are excluded for counting because it is thought that inclusions with that size and smaller do not affect corrosion resistance significantly. The number of alumina-based inclusions having an equivalent circle diameter exceeding 1.0 µm is divided by the total area of the field of view, and the result is treated as the number density of alumina-based inclusions having an equivalent circle diameter exceeding 1.0 µm.

The number density of alumina-based inclusions may be measured using a scanning electron microscope equipped with composition analysis functionalities (so-called SEM-EDS). For example, automated inclusion analysis equipment "Metals Quality Analyzer (TM)" from FEI Company (ASPEX Corporation) may be used to measure inclusions in an area of 6 by 6 mm, where the minimum equivalent circle diameter of inclusions is 1.0 pm, and extract from the obtained data those inclusions in which both the Al and O contents are not lower than 20 % and treat them as alumina-based inclusions for the purpose of analysis to determine density.

### [Atomic Concentration Ratio of Cr Oxides to Fe Oxides at Surface of Martensitic Stainless Steel Pipe]

In the martensitic stainless steel pipe according to the present embodiment, the atomic concentration ratio of Cr oxides to Fe oxides obtained by X-ray photoelectron spectroscopic (XPS) analysis against the surface of the martensitic stainless steel pipe, Cr-O/Fe-O (hereinafter referred to as "Cr-O/Fe-O ratio at the surface"), is not lower than 0.30.

If dechromation has occurred in a martensitic stainless steel pipe, a Cr-depleted layer can be produced more easily during welding. The depth of dechromation is correlated with the Cr-O/Fe-O ratio at the surface; by measuring this, the depth of dechromation can be evaluated quickly and quantitatively. More specifically, if the Cr-O/Fe-O ratio at the surface is lower than 0.30, sufficient SCC resistance may not be obtained even if PWHT has been performed. The Cr-O/Fe-O ratio at the surface is preferably not lower than 0.32, more preferably not lower than 0.35, yet more preferably not lower than 0.39, still more preferably not lower than 0.45, and yet more preferably not lower than 0.60 %.

On the other hand, though the detailed reason is unknown, an excessively high Cr-O/Fe-O ratio at the surface may cause black spots on the surface of the martensitic stainless steel pipe, or cause the surface to exhibit blackish or yellowish colors. Although such changes in color do not affect SCC resistance after welding, they are not preferable in terms of product appearance. In view of this, it is preferable that the Cr-O/Fe-O ratio at the surface is not excessively high. The Cr-O/Fe-O ratio at the surface is preferably not higher than 1.50, more preferably not higher than 1.40, and yet more preferably not higher than 1.20.

XPS involves the following measurement conditions:
Source: monochromatized Al-Kα beam (1486.6 eV), with an excitation voltage of 15 kV and an excitation current of 3 mA;
X-ray beam diameter: 100 µm in diameter;
Direction of incident X-ray: 45 ° relative to the normal to the steel surface; and
Direction of photoelectron capture: 45 ° relative to the normal to the steel surface.
Prior to measurement, the steel that provides specimens is subjected to ultrasonic cleaning with organic solution or other common processes to remove the contaminants on the surface. Further, when the specimen is attached to the specimen holder of the analyzer, a reliable electric contact (i.e., conduction) is established to prevent the specimen from being electrified. Furthermore, surface contaminant removal through ion sputtering is not performed; instead, the measurement is done on the as-received surface.

For every element found in a wide-scan spectrum from the measurement, narrow-scanning is done to provide a photoelectron spectrum. The background is removed from each photoelectron spectrum to provide photoelectron peaks, and the atomic concentration (mol. %) of each element is calculated from the integrated intensity of a peak. The background intensity is determined by applying the Shirley method. Further, each of the photoelectron peaks at Cr 2p3/2 and Fe 2p3/2 is separated into a metal component and an oxide component, and the component percentages of the metal and oxide components is determined from the integrated intensity for each component. Each of the atomic concentrations of Cr and Fe (mol. %) is multiplied by the component percentages of the oxide component of the respective one of these elements to calculate the atomic concentration of Cr oxides (mol. %) and the atomic concentration of Fe oxides (mol. %). The former divided by the latter is treated as the "atomic concentration ratio of Cr oxides to Fe oxides obtained by XPS analysis against the surface of the martensitic stainless steel pipe, Cr-O/Fe-O".

Each of the photoelectron peaks for Cr 2p3/2 and Fe 2p3/2 obtained from the specimen can be separated into metal and oxide components in the following manner: First, from standard substances (i.e., pure substances) i.e. Cr, Cr₂O₃, Fe and Fe₃O₄, a photoelectron peak for each of Cr 2p3/2 and Fe 2p3/2 is obtained under the same measurement conditions as for specimens. Next, the shape of each peak obtained from a specimen is reproduced by synthesizing peaks obtained from the metal or oxides of the corresponding element, i.e., a standard substance.

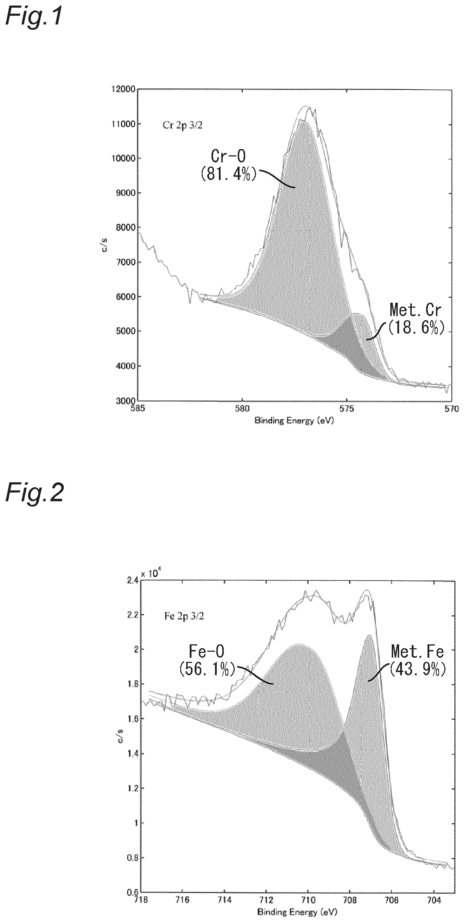

For reference, FIGS. 1 and 2 show photoelectron spectra of Cr 2p3/2 and Fe 2p3/2 obtained from the surface of a commercial SUS304 stainless steel plate, where the background has been removed and then the spectrum has been divided into metal and oxide components.

### [Method of Manufacturing Martensitic Stainless Steel Pipe]

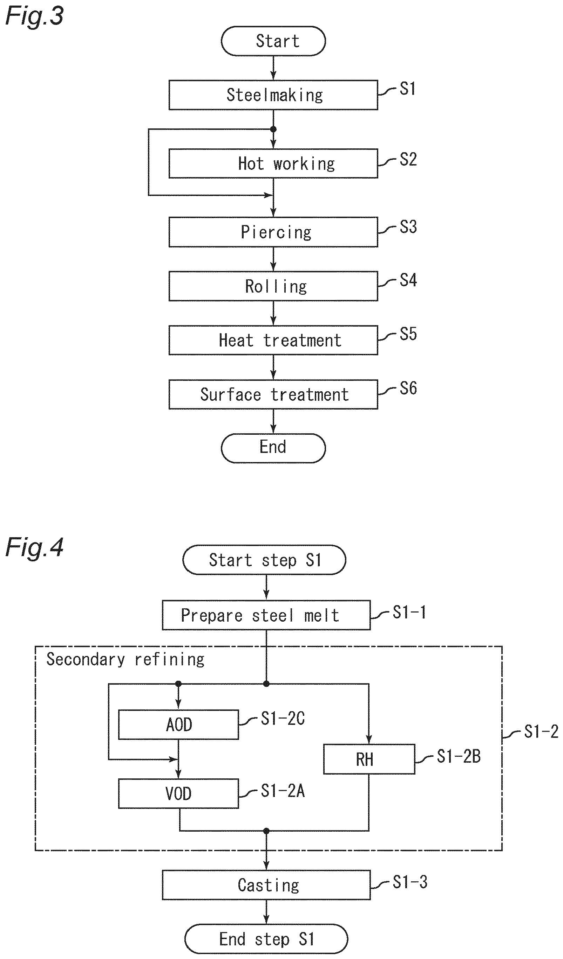

A method of manufacturing the martensitic stainless steel pipe according to an embodiment of the present invention will be described. FIG. 3 is a flow chart showing the method of manufacturing a martensitic stainless steel pipe according to an embodiment of the present invention. The manufacturing method includes a steelmaking step (step S1), a hot working step (step S2), a piercing step (step S3), a rolling step (step S4), a heat treatment step (step S5), and a surface treatment step (step S6). These steps will now be described in detail.

### [Steelmaking Step (Step S1)]

At the steelmaking step (step S1), a slab, a bloom, or a billet is produced from steel melt. FIG. 4 is a flow chart that more specifically shows the steelmaking step (step S1). The steelmaking step (step S1) includes the step of preparing steel melt (step S1-1), the step of subjecting the steel melt to secondary refining (step S1-2), and the step of casting the steel melt that has undergone the secondary refining (step S1-3).

First, steel melt is prepared (step S1-1). The steel melt prepared may be, for example, steel melt produced by melting molten iron and various alloy materials in a converter furnace or steel melt produced by melting scrap in an electric furnace, depending on the details of the secondary refining (step S1-2). The chemical composition of the steel melt used is one adjusted such that the chemical composition after the secondary refining (step S1-2) falls within the range of the chemical composition the martensitic stainless steel pipe discussed above. It will be understood that the chemical composition may be adjusted by adding alloying elements to the steel melt during the secondary refining (step S1-2).

The prepared steel melt is subjected to secondary refining (step S1-2). "Secondary refining" as used in the present embodiment means refining in equipment other than a converter furnace or electric furnace (i.e., out-pile refining). The main purpose of the secondary refining (step S1-2) is degassing (i.e., removing carbon and nitrogen), after which deoxidation with Al is performed to fix oxygen in the form of inclusions. If the secondary refining is performed insufficiently, this will lead to an increased number density of inclusions in the slab, bloom or billet produced at the casting step (step S1-3), leading to an increased number density of inclusions in the martensitic stainless steel pipe that is ultimately produced.

The secondary refining (step S1-2) in the method of manufacturing the martensitic stainless steel pipe according to the present embodiment includes either VOD (step S1-2A) or RH vacuum degassing (step S1-2B).

VOD (Vacuum Oxygen Decarburization; step S1-2A) involves decarburization by top-blowing oxygen onto steel melt under reduced pressure. If VOD is performed as the secondary refining, the pressure inside the vacuum chamber is reduced to 10 torr or below, and oxygen is supplied for 10 minutes or longer. The pressure in the vacuum chamber is preferably not higher than 8 torr, and more preferably not higher than 5 torr. The period of time for which oxygen is supplied is preferably not shorter than 15 minutes, and more preferably not shorter than 20 minutes.

Prior to the VOD (step S1-2A), AOD (Argon Oxygen Decarburization; step S1-2C) may be performed. AOD involves decarburization performed while blowing inert gas (argon or nitrogen) together with oxygen into steel melt to reduce the CO gas pressure in the atmosphere to minimize oxidation of Cr. If AOD is performed, the period of time for which oxygen is supplied is preferably not shorter than 10 minutes, and more preferably not shorter than 15 minutes.

RH vacuum degassing (step S1-2B) involves degassing by circulating steel melt between a vacuum vessel with a reduced pressure and a ladle. If RH vacuum degassing is performed as the secondary refining, the pressure inside the vacuum vessel is reduced to 10 torr or below, and circulation of steel melt (i.e., blowing-in of ascending gas into the ladle) is performed for 5 minutes or longer. The pressure in the vacuum vessel is preferably not higher than 8 torr, and more preferably not higher than 5 torr. The period of time for which steel melt is circulated is preferably not shorter than 10 minutes, and more preferably not shorter than 15 minutes.

During the RH vacuum degassing (step S1-2B), top-blowing or half-immersed nozzles may be provided inside the vacuum vessel to perform oxygen blowing. Further, top-blowing nozzles or blow-in tuyeres may be provided inside the vacuum vessel to supply a desulfurizing flux.

The steel melt that has undergone the secondary refining is cast to produce a slab, bloom or billet (step S1-3). The stab, bloom or billet may have a rectangular cross section or a circular cross section. The chemical composition of the slab, bloom or billet as cast is the same as the chemical composition of the martensitic stainless steel pipe that is ultimately produced.

### [Hot Working Step (Step S2)]

The slab, bloom or billet produced by the steelmaking step (step S1) is hot worked to produce a billet having a circular cross section of a predetermined size (hereinafter referred to as "round billet") (step S2). The hot working may be, for example, blooming, hot rolling or hot forging. If blooming is performed, it is preferable, prior to blooming, to perform heating for 1 hour or longer in a furnace at 1100 °C or higher. The heating temperature prior to blooming (i.e., furnace temperature) is preferably not lower than 1150 °C, and more preferably not lower than 1200 °C. The heating time prior to blooming (i.e., in-furnace time) is preferably not shorter than 2 hours, and more preferably not shorter than 3 hours.

The hot working step (step S2) is optional. That is, the method of manufacturing the martensitic stainless steel pipe according to the present embodiment may not include the hot working step (step S2), and a round billet may be directly produced by the casting step (step S1-3) of the steelmaking step (step S1).

### [Piercing Step (Step S3)]

The round billet produced through casting, or the round billet produced through hot working, is pierced (step S3). More specifically, the round billet is heated in a furnace at 1100 °C or higher for 20 minutes to 10 hours, followed by piercing by the Mannesmann piercing method.

### [Rolling Step (Step S4)]

The pierced billet is rolled to produce a hollow shell (i.e., seamless steel pipe) (step S4). More specifically, immediately after the piercing step (step S3), the billet is rolled by the mandrel mill process or the plug mill process into a predetermined wall thickness, and the billet is then adjusted by a sizer or reducer into a predetermined outer diameter.

### [Heat Treatment Step (Step S5)]

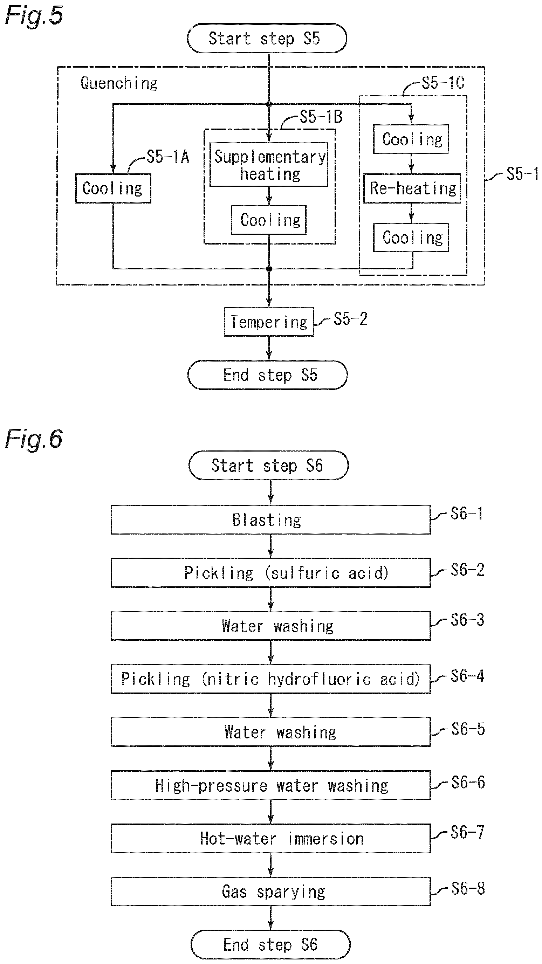

The hollow shell thus produced is subjected to heat treatment (step S5). FIG. 5 is a flow chart that more specifically shows the heat treatment step (step S5). The heat treatment step (step S5) includes the step of quenching the hollow shell (step S5-1) and the step of tempering the quenched hollow shell (step S5-2).

The step of quenching the hollow shell (step S5-1) may be direct quenching (step S5-1A), in-line quenching (step S5-1B), or re-heat quenching (step S5-1C). Direct quenching (step S5-1A) is a heat treatment in which a hollow shell at a high temperature directly after the rolling is cooled from a temperature not lower than the Ar₃ point. In-line quenching (step S5-1B) is a heat treatment in which a hollow shell at a high temperature directly after the rolling is held in a supplementary-heating furnace at a temperature not lower than the Ac₃ point, preferably at 800 to 1100 °C, for 1 to 60 minutes to homogenize the temperature of the hollow shell, and is then cooled. Re-heat quenching (step S5-1C) is a heat treatment in which a hollow shell at a high temperature directly after the rolling is cooled before being held in a re-heating furnace at a temperature not lower than the Ac₃, preferably at 800 to 1100 °C, for 1 to 360 minutes, and is then cooled again.

The cooling in each of the direct quenching (step S5-1A), in-line quenching (step S5-1B), and re-heat quenching (step S5-1C) may be air cooling (i.e., natural cooling), forced air cooling by a fan, oil cooling, or water cooling. Stainless steel having the above-discussed chemical composition has self-hardening properties, and thus provides a microstructure mainly composed of martensite even with a cooling rate equivalent to that of air cooling (i.e., natural cooling).

The hollow shell as quenched is tempered (step S5-2). The hollow shell is held in a tempering furnace at a temperature not higher than the Ac₁ point, preferably at 500 to 700 °C, for 10 to 180 minutes.

### [Surface Treatment Step (Step S6)]

The hollow shell as tempered is subjected to surface treatment (step S6). FIG. 6 is a flow chart that more specifically shows the surface treatment step (step S6). The surface treatment step (step S6) includes the steps of blasting (step S6-1), pickling with sulfuric acid (step S6-2), water washing (step S6-3), pickling with nitric hydrofluoric acid (step S6-4), water washing (step S6-5), high-pressure water washing (step S6-6), hot-water immersion (step S6-7), and gas spraying (step S6-8).

First, the inner and outer surfaces of the tempered hollow shell is blasted to mechanically remove oxide scales (step S6-1). Although the blasting is not limited to any particular projection material (i.e., abrasive), the material is preferably alumina. The grain size number of the projection material is preferably not higher than #60, and more preferably not higher than #30. Otherwise, the blasting is not limited to any particular process conditions, and a person skilled in the art can make appropriate adjustments to properly remove oxide scales on the surface of the hollow shell.

The hollow shell as blasted is pickled with sulfuric acid (step S6-2). Specifically, the hollow shell is immersed in an aqueous solution of sulfuric acid. The temperature of the sulfuric acid solution is preferably 40 to 80 °C. The concentration of sulfuric acid is preferably 10 to 30 mass %. During this step, it is preferable to rotate the hollow shell. The immersion time is preferably not shorter than 10 minutes, and more preferably not shorter than 20 minutes, depending on the extent of blasting and the concentration and temperature of the pickling solution. If the immersion time is excessively short, some oxide scales remain such that the surface of the hollow shell is not exposed, and thus the next step, i.e., pickling with nitric hydrofluoric acid, may not produce sufficient effects. On the other hand, if the immersion time is excessively long, this means lower manufacturing efficiency. The immersion time is preferably not longer than 1 hour, and more preferably not longer than 40 minutes. Further, to produce sufficient effects of the pickling, it is preferable that the ratio between the volume of the pickling solution and the surface area of the material (i.e., specific amount of solution: volume of pickling solution / surface area of hollow shell) is not lower than 10 ml/cm².

After the pickling with sulfuric acid, the hollow shell is thoroughly water washed (step S6-3). If this water washing is performed insufficiently, the next step, i.e., the pickling with nitric hydrofluoric acid, may not produce effects.

Subsequently, the surface of the hollow shell on which oxide scales have been removed is pickled with nitric hydrofluoric acid (step S6-4). Specifically, the hollow shell is immersed in an aqueous solution of nitric hydrofluoric acid. If the temperature of the pickling solution is excessively high, the Cr-O/Fe-O ratio at the surface becomes unnecessarily high, which may result in a poor appearance. The temperature of the pickling solution is preferably not higher than 40 °C, and more preferably not higher than 30 °C.

During this step, it is preferable to rotate the hollow shell. The mixture ratio between hydrofluoric acid and nitric acid (hydrofluoric acid : nitric acid) is preferably 1:1 to 1:5 in mass ratio, and the concentration of the entire solution is preferably 5 to 30 mass %. The immersion time is preferably not shorter than 1 minute, and more preferably not shorter than 2 minutes, depending on the concentration of the pickling solution and other factors. There is a tendency that the longer the immersion time, the higher the Cr-O/Fe-O ratio at the surface becomes. On the other hand, if the immersion time is excessively long, this means lower manufacturing efficiency. The immersion time is preferably not longer than 10 minutes, and more preferably not longer than 5 minutes. Again, during this pickling step, it is preferable that the ratio between the volume of the pickling solution and the surface area of the material (i.e., specific amount of solution: volume of pickling solution / surface area of hollow shell) is not lower than 10 ml/cm².

To prevent pickling solution from remaining and to remove corrosion products, the pickling is followed by water washing (step S6-5), high-pressure water washing (step S6-6), hot-water immersion (step S6-7), and gas spraying (step S6-8).

The discharge pressure of the injection nozzles during the high-pressure water washing (step S6-6) is preferably not lower than 0.98 MPa (not lower than 10 kgf/cm²). The diameter of the injection tips of the injection nozzles is preferably 0.8 to 3.0 mm, and the distance between the injection tips of the injection nozzles, on one hand, and the hollow shell, on the other, is preferably not larger than 2.7 m. The amount of high-pressure water being injected per unite area of the outer surface of the hollow shell is preferably not smaller than 144 L/m².

The temperature of the water for the hot-water immersion (step S6-7) is preferably 60 to 90 °C. The immersion time is preferably not shorter than 1 minute.

The gas being injected during the gas spraying (step S6-8) may be, for example, air, nitrogen or argon. The discharge pressure is preferably 0.2 to 0.5 MPa. The time interval between the completion of the step immediately before the gas spraying (e.g., completion of the hot-water immersion (step S6-7)) and the beginning of the gas spraying is preferably shorter than 15 minutes.

As far as the solving of the problem of reducing the increase in SCC susceptibility occurring at HAZs after welding is concerned, the water washing (step S6-5), high-pressure water washing (step S-6-6), hot-water immersion (step S6-7) and gas spraying (step S6-8) are not essential, but optional. On the other hand, if these steps are insufficiently performed, corrosion products may stick to the surface of the hollow shell such that predetermined surface conditions may not be achieved.

The martensitic stainless steel pipe is produced by these steps. According to this manufacturing method, after the heat treatment, oxide scales are removed and then the surface of the martensitic stainless steel pipe is pickled with nitric hydrofluoric acid. Thus, the Cr-O/Fe-O ratio at the surface will be not lower than 0.30.

The martensitic stainless steel pipe according to an embodiment of the present invention and the method of manufacturing such a steel pipe have been described. The present embodiment provides a martensitic stainless steel pipe that can reduce the increase in SCC susceptibility occurring at HAZs after welding. The martensitic stainless steel pipe according to the present embodiment, which can reduce the increase in SCC susceptibility occurring at HAZs after welding, can be suitably used as a steel pipe for line pipe.

The martensitic stainless steel pipe according to the present embodiment preferably has a yield strength of 448 to 759 MPa. An upper limit for yield strength is specified because an excessively high yield strength would lead to deterioration in SCC resistance and/or sulfide stress-corrosion cracking resistance. Also, overmatching in a welded joint would be difficult. A lower limit for the yield strength of the martensitic stainless steel pipe is more preferably 517 MPa, and yet more preferably 551 MPa. An upper limit for the yield strength of the martensitic stainless steel pipe is more preferably 689 MPa, and yet more preferably 656 MPa.

### EXAMPLES

The present invention will now be described more specifically using examples. The present invention is not limited to these examples.

Steel melt is subjected to secondary refining to produce slabs with a rectangular cross section and having the chemical compositions shown in Table 1. "-" in Table 1 indicates that the content of the relevant element is at an impurity level.

### [Table 1]

**TABLE 1**

| Steel no. | Chemical composition (in mass %, balance Fe and impurities) | | | | | | | | | | | | | | | |
|---|---|---|---|---|---|---|---|---|---|---|---|---|---|---|---|---|
| | C | Si | Mn | P | S | Cr | Mo | Ti | Ni | Cu | sol. Al | Ca | N | V | Nb | Co |
| 1 | 0.012 | 0.23 | 0.49 | 0.020 | 0.0010 | 12.98 | 1.93 | 0.05 | 6.44 | 0.02 | 0.022 | 0.0021 | 0.0080 | 0.050 | 0.040 | 0.093 |
| 2 | 0.013 | 0.21 | 0.53 | 0.021 | 0.0010 | \| 12.61 | 2.29 | 0.07 | 6.51 | 0.02 | 0.023 | 0.0019 | 0.0080 | 0.040 | 0.070 | 0.296 |
| 3 | 0.010 | 0.30 | 0.47 | 0.025 | 0.0010 | 12.69 | 2.35 | 0.12 | 6.01 | 0.03 | 0.021 | 0.0015 | 0.0070 | 0.030 | 0.060 | 0.194 |
| 4 | 0.012 | 0.24 | 0.48 | 0.018 | 0.0010 | 12.35 | 0.50 | 0.05 | 5.81 | 0.04 | 0.023 | 0.0021 | 0.0080 | 0.010 | 0.040 | 0.187 |
| 5 | 0.014 | 0.23 | 0.46 | 0.017 | 0.0010 | 10.20 | 2.35 | 0.02 | 6.02 | 0.03 | 0.021 | 0.0019 | 0.0060 | 0.050 | 0.050 | 0.177 |
| 6 | 0.018 | 0.35 | 0.55 | 0.016 | 0.0010 | 12.60 | 2.34 | 0.09 | 6.23 | 0.05 | 0.016 | 0.0019 | 0.0085 | 0.060 | 0.030 | 0.271 |
| 7 | 0.017 | 0.24 | 0.50 | 0.021 | 0.0010 | 12.54 | 1.94 | 0.05 | 6.46 | 0.02 | 0.008 | 0.0028 | 0.0120 | 0.050 | 0.040 | 0.269 |
| 8 | 0.041 | 0.39 | 0.97 | 0.017 | 0.0009 | 12.60 | 1.50 | 0.04 | 5.89 | 0.06 | 0.002 | 0.0018 | 0.0070 | 0.040 | 0.020 | 0.295 |
| 9 | 0.016 | 0.23 | 0.35 | 0.015 | 0.0010 | 12.80 | 2.21 | 0.04 | 6.22 | 0.03 | 0.018 | 0.0026 | 0.0080 | 0.030 | 0.040 | 0.230 |
| 10 | 0.010 | 0.24 | 0.40 | 0.020 | 0.0010 | 11.99 | 2.01 | 0.10 | 5.43 | 0.20 | 0.024 | 0.0024 | 0.0081 | - | - | - |
| 11 | 0.011 | 0.23 | 0.40 | 0.020 | 0.0010 | 12.12 | 2.04 | 0.10 | 5.46 | 0.21 | 0.051 | 0.0012 | 0.0073 | 0.050 | - | - |
| 12 | 0.012 | 0.23 | 0.40 | 0.019 | 0.0010 | 11.94 | 2.01 | 0.10 | 5.41 | 0.20 | 0.034 | 0.0019 | 0.0077 | - | 0.003 | - |
| 13 | 0.011 | 0.25 | 0.42 | 0.021 | 0.0010 | 12.13 | 2.04 | 0.10 | 5.43 | 0.21 | 0.019 | 0.0018 | 0.0077 | - | - | 0.013 |

Martensitic stainless steel pipes were fabricated from these slabs. Specifically, each slab was heated in a furnace at 1250 °C for 5 hours and then bloomed to produce a round billet with an outer diameter of 360 mm. Each round billet was heated for 180 minutes in a furnace at the relevant temperature as indicated in the columns labeled "Pipe-making heating conditions" in Table 2, and was then pierced; immediately after the piercing, the billet was rolled to produce a hollow shell having the relevant outer diameter and wall thickness indicated in the columns labeled "Size" in Table 2.

### [Table 2]

**TABLE 2**

| Ex. Char. | Steel No. | Size | | Secondary refining during steelmaking | | Blooming conditions | | Billet outer diam. (mm) | Pipe-making heating conditions | | Quenching | | | | Tempering | |
|---|---|---|---|---|---|---|---|---|---|---|---|---|---|---|---|---|
| | | Outer diam. (mm) | Wall thickness (mm) | VOD (min) | RH (min) | Temp. (°C) | Time (h) | | Temp. (°C) | Time (mi n) | Type | Temp. (°C) | Time (min) | Cooling | Temp. (°C) | Time (min) |
| A | 1 | 273.15 | 14 | 30 | - | 1250 | 5 | ϕ360 | 1230 | 180 | re-heat | 900 | 15 | water cooling | 630 | 120 |
| B | 1 | 355.6 | 16 | 30 | - | 1250 | 5 | ϕ360 | 1230 | 180 | re-heat | 900 | 15 | water cooling | 630 | 120 |
| C | 1 | 219.1 | 12.7 | 30 | - | 1250 | 5 | ϕ360 | 1230 | 180 | re-heat | 900 | 15 | water cooling | 630 | 120 |
| D | 1 | 273.15 | 14 | 30 | - | 1250 | 5 | ϕ360 | 1200 | 180 | re-heat | 900 | 15 | water cooling | 630 | 120 |
| E | 1 | 273.15 | 14 | 30 | - | 1250 | 5 | ϕ360 | 1230 | 180 | in-line | 900 | 15 | water cooling | 630 | 120 |
| F | 1 | 273.15 | 14 | 30 | - | 1250 | 5 | ϕ360 | 1230 | 180 | re-heat | 950 | 15 | water cooling | 630 | 120 |
| G | 1 | 273.15 | 14 | 30 | - | 1250 | 5 | ϕ360 | 1230 | 180 | re-heat | 900 | 15 | air cooling | 630 | 120 |
| H | 1 | 273.15 | 14 | 30 | - | 1250 | 5 | ϕ360 | 1230 | 180 | re-heat | 900 | 15 | water cooling | 620 | 160 |
| I | 1 | 273.15 | 14 | 30 | - | 1250 | 5 | ϕ360 | 1230 | 180 | re-heat | 900 | 15 | water cooling | 630 | 120 |
| J | 1 | 273.15 | 14 | 30 | - | 1250 | 5 | ϕ360 | 1230 | 180 | re-heat | 900 | 15 | water cooling | 630 | 120 |
| K | 1 | 273.15 | 14 | 30 | - | 1250 | 5 | ϕ360 | 1230 | 180 | re-heat | 900 | 15 | water cooling | 630 | 120 |
| I. | 2 | 1273.15 | 16 | 30 | - | 1250 | 5 | ϕ360 | 1230 | 180 | re-heat | 900 | 15 | water cooling | 630 | 120 |
| M | 3 | 273.15 | 16 | 30 | - | 1250 | 5 | ϕ360 | 1230 | 180 | re-heat | 900 | 15 | water cooling | 630 | 120 |
| N | | 273.15 | 16 | 30 | - | 1250 | 5 | ϕ360 | 1230 | 180 | re-heat | 900 | 15 | water cooling | 630 | 120 |
| O | 5 | 273.15 | 16 | 30 | - | 1250 | 5 | ϕ360 | 1230 | 180 | re-heat | 900 | 15 | water cooling | 630 | 120 |
| P | 6 | 273.15 | 16 | - | 30 | 1250 | 5 | ϕ360 | 1230 | 180 | re-heat | 900 | 15 | water cooling | 630 | 120 |
| Q | 7 | 273.15 | 16 | 8 | - | 1250 | 5 | ϕ360 | 1230 | 180 | re-heat | 900 | 15 | water cooling | 630 | 120 |
| R | 8 | 273.15 | 16 | - | - | 1250 | 5 | ϕ360 | 1230 | 180 | re-heat | 900 | 15 | water cooling | 630 | 120 |
| S | 9 | 273.15 | 16 | - | 3 | 1250 | 5 | ϕ360 | 1230 | 180 | re-heat | 900 | 15 | water cooling | 630 | 120 |
| T | 1 | 273.15 | 16 | 30 | - | 1250 | 5 | ϕ360 | 1230 | 180 | re-heat | 900 | 15 | water cooling | 630 | 120 |
| U | 10 | 273.15 | 14 | 30 | - | 1250 | 5 | ϕ360 | 1230 | 180 | re-heat | 900 | 15 | water cooling | 630 | 120 |
| V | 11 | 273.15 | 14 | 30 | - | 1250 | 5 | ϕ360 | 1230 | 180 | re-heat | 900 | 15 | water cooling | 630 | 120 |
| W | 12 | 273.15 | 14 | 30 | - | 1250 | 5 | ϕ360 | 1230 | 180 | re-heat | 900 | 15 | water cooling | 630 | 120 |
| X | 13 | 273.15 | 14 | 30 | - | 1250 | 5 | ϕ360 | 1230 | 180 | re-heat \| | 900 | 15 | water cooling | 630 | 120 |
| Y | 1 | 273.15 | 14 | 30 | - | 1250 | 5 | ϕ360 | 1230 | 180 | re-heat \| | 900 | 15 | water cooling | 630 | 120 |
| Z | 1 | 273.15 | 14 | 30 | - | 1250 | 5 | ϕ360 | 1230 | 180 | re-heat \| | 900 | I 15 | water cooling | 630 | 120 |

Thereafter, quenching and tempering were performed under the relevant conditions indicated in the columns labeled "Quenching" and "Tempering" in Table 2. The steel pipes for which the column "Type" for "Quenching" in Table 2 indicates "re-heat" were subjected to re-heat quenching (step S5-1C in FIG. 5). The values in the column "Temp." for "Quenching" for these steel pipes represent temperatures in the re-heating furnace, and the values in the column "Time" represent holding times starting with the arrival of the surface temperature of the hollow shell at a temperature 10 °C lower than the furnace temperature. The steel pipe for which the column "Type" indicates "in-line" (i.e., Example Character E) was subjected to in-line quenching (step S5-1B of FIG. 5). The value in the column "Temp." for "Quenching" for this steel pipe (i.e., Example Character E) represents a temperature in the supplementary-heating furnace, and the value in the column "Time" a time for which the pipe stayed in the furnace. A value in the column "Temp." for "Tempering" represents a temperature in the tempering furnace, and a value in the column "Time" is a period of time for which the pipe stayed in the furnace.

The conditions for VOD and RH vacuum degassing during steelmaking are also shown in Table 2. "-" in the columns "VOD" and "RH" indicates that the relevant process was not performed. The steels on which VOD was performed (i.e., Example Characters A to O, Q and T to Z) were supplied with oxygen in a vacuum chamber at a pressure as low as 5 torr for the relevant periods of time indicated in the column "VOD" in Table 2. For the steels on which RH vacuum degassing was performed (i.e., Example Characters P and S), steel melt was circulated between a vacuum chamber at a pressure as low as 5 torr and a ladle for the relevant periods of time indicated in the column "RH" in Table 2.

After the tempering, except for the steel pipe labeled Example Character Y, blasting was performed using alumina (grain size number: #14) as projection material to mechanically remove oxide scales on the surface of the hollow shell. Thereafter, the pickling with sulfuric acid and the pickling with nitric hydrofluoric acid were performed under the relevant conditions shown in Table 3. More specifically, the hollow shell was immersed in aqueous solutions with the concentrations and at the temperatures indicated in Table 3. A value in the column "Mix. ratio" for "Pickling with nitric hydrofluoric acid" in Table 3 represents a ratio of nitric acid to hydrofluoric acid. "-" in Table 3 indicates that the relevant pickling was not performed. The water washing was performed between the pickling with sulfuric acid and the pickling with nitric hydrofluoric acid, and the pickling with nitric hydrofluoric acid was followed by water washing, high-pressure water washing, hot-water immersion, air blow (i.e., gas spraying). The temperature for hot-water immersion was 80 °C.

### [Table 3]

**TABLE 3**

| Ex. Char. | Blasting | Pickling with sulfuric acid | | | Pickling with nitric hydrofluoric acid | | | | | | Inclusion density (/mm²) | Cr-O/ Fe-O | SCC test |
|---|---|---|---|---|---|---|---|---|---|---|---|---|---|
| | | Sulfuric acid concent. (mass %) | Temp. (°C) | Time (min) | Hydrofluoric acid concent. (mass %) | Nitric acid concent. (mass %) | Mix. Ratio (nitric acid / hydrofluoric acid) | Acid concent. mass % | Temp. (°C) | Time (min) | | | |
| A | yes | 18 | 50 | 20 | 6.0 | 9.0 | 1.5 | 15.0 | 25 | 3 | 12.2 | 0.81 | good |
| B | yes | 18 | 50 | 20 | 4.0 | 9.7 | 2.4 | 13.7 | 25 | 2 | 14.6 | 0.73 | good |
| C | yes | 18 | 50 | 20 | 5.0 | 7.6 | 1.5 | 12.6 | 25 | 2 | 25.5 | 0.68 | good |
| D | yes | 18 | 50 | 20 | 5.0 | 8.5 | 1.7 | 13.5 | 25 | 4 | 21.7 | 0.73 | good |
| E | yes | 18 | 50 | 20 | 7.0 | 9.9 | 1.4 | 16.9 | 25 | 4 | 21.2 | 0.92 | good |
| F | yes | 18 | 50 | 20 | 7.0 | 8.3 | 1.2 | 15.3 | 25 | 4 | 24.4 | 0.84 | good |
| G | yes | 18 | 50 | 20 | 4.0 | 8.1 | 2.0 | 12.1 | 25 | 3 | 16.5 | 0.65 | good |
| R | ves | 18 | 50 | 20 | 5.0 | 9.8 | 2.0 | 14.8 | 25 | 4 | 16.5 | 0.79 | good |
| I | yes | 18 | 50 | 20 | 7.0 | 8.5 | 1.2 | 15.5 | 25 | 4 | 31.4 | 0.85 | good |
| J | yes | 18 | 50 | 20 | 4.0 | 10.0 | 2.5 | 14.0 | 25 | 2 | 29.8 | 0.74 | good |
| K | yes | 18 | 50 | 20 | 5.0 | 9.7 | 1.9 | 14.7 | 25 | 3 | 25.7 | 0.79 | good |
| L | yes | 18 | 50 | 20 | 7.0 | 10.0 | 1.4 | 17.0 | 25 | 4 | 24.5 | 0.92 | good |
| M | yes | 18 | 50 | 20 | 6.0 | 8.9 | 1.5 | 14.9 | 25 | 2 | 24.8 | 0.81 | good |
| N | yes | 18 | 50 | 20 | 7.0 | 9.1 | 1.3 | 16.1 | 25 | 2 | 18.4 | 0.88 | poor |
| O | yes | 18 | 50 | 20 | 4.0 | 9.9 | 2.5 | 13.9 | 25 | 3 | 14.4 | 0.74 | poor |
| P | yes | 18 | 50 | 20 | 5.0 | 8.0 | 1.6 | 13.0 | 25 | 3 | 22.3 | 0.70 | good |
| Q | yes | is | 50 | 20 | 6.0 | 9.0 | 1.5 | 15.0 | 25 | 3 | 73.2 | 0.81 | poor |
| R | yes | 18 | 50 | 20 | 5.0 | 7.9 | 1.6 | 12.9 | 25 | 2 | 101.0 | 0.70 | poor |
| S | yes | is | 50 | 20 | 4.8 | 7.5 | 1.6 | 12.3 | 25 | 3 | 104.4 | 0.66 | poor |
| T | yes | 18 | 50 | 20 | - | - | - | - | - | - | 15.6 | 0.15 | poor |
| U | yes | 18 | 50 | 20 | 6.0 | 9.0 | 1.5 | 15.0 | 25 | 3 | 18.4 | 0.81 | good |
| V | yes | 18 | 50 | 20 | 6.0 | 9.0 | 1.5 | 15.0 | 25 | 3 | 14.2 | 0.81 | good |
| W | yes | 18 | 50 | 20 | 6.0 | 9.0 | 1.5 | 15.0 | 25 | 3 | 16.9 | 0.81 | good |
| X | yes | 18 | 50 | 20 | 6.0 | 9.0 | 1.5 | 15.0 | 25 | 3 | 20.6 | 0.81 | good |
| Y | - | 18 | 50 | 20 | 6.0 | 9.0 | 1.5 | 15.0 | 25 | 3 | 12.2 | | poor |
| Z | yes | - | - | - | 6.0 | 9.0 | 1.5 | 15.0 | 25 | 3 | 12.2 | 0.25 | poor |

For each steel pipe, the number density of alumina-based inclusions having an equivalent circle diameter exceeding 1.0 µm was measured. Specifically, for each steel pipe, a test specimen was taken from a portion in its middle along the wall thickness, where a plane containing the pipe axis (in the direction of rolling) and a radius (in the direction of the wall thickness) of the steel pipe served as a plane to be observed; 10 fields of view were observed and the number density of inclusions was determined. The area of each field of view was 36 mm². The inclusions were identified and their number density was calculated in accordance with the method discussed in connection with the embodiments, using automatic inclusion analysis equipment "Metals Quality Analyzer (TM)" from FEI Company (ASPEX Corporation). The measurement results are shown in the column "Inclusion density" in Table 3, shown above.

XPS analysis was conducted on the surface of the steel pipe after the pickling under the conditions described in connection with the embodiments to determine the atomic concentration ratio of Cr oxides to Fe oxides, Cr-O/Fe-O. XPS was not conducted on the steel pipe labeled Example Character Y, which had remaining black scale. The results are shown in Table 3 above.

For XPS analysis, a specimen with a size that allows analysis was cut out of a steel pipe and was subjected to ultrasonic cleaning with acetone. The measurements through XPS was done with Quantera SXM from ULVAC-PHI, Incorporated, and the measurement results were analyzed using MultiPak from ULVAC-PHI, Incorporated. It is to be noted that the XPS analysis of the surfaces of the steel pipes showed no significant changes in the component percentages of the oxide components of Cr and Fe.

To determine the integrated intensities of photoelectron peaks, the Shirley method was applied to remove the spectrum background in advance, where the binding energy values shown in Table 4 were used as the start and end points of the background. The sensitivity coefficients shown in Table 4 were used to calculate atomic concentration.

### [Table 4]

**TABLE 4**

| Photoelectron peak | Background | | Sensitivity coefficient | |
|---|---|---|---|---|
| | Start point (eV) | End point (eV) | | |
| C 1s | 281 | 293 | 16.3 | |
| O 1s | 526 | 538 | 38.7 | |
| Cr 2p3/2 | 571 | 582 | 94.0 | |
| Fe 2p3/2 | 708 | 718 | 114.5 | |
| Ni 2p3/2 | 850 | 867 | 136.1 | |
| Mo 3d3/2 | 223 | 239 | 207.7 | |

These steel pipes were used as base materials to fabricate welded joints. Specifically, ends of steel pipes were made to abut each other, and girth welding was performed by MAG welding using a filler of duplex stainless steel; then, a post-weld heat treatment was performed by heating the weld heat-affected zones at 650 °C for 5 minutes to fabricate a welded joint.

SCC testing was conducted on the various welded joints in accordance with the method described in "Corrosion Resistant Alloys for Oil and Gas Production: Guidance on General Requirements and Test Methods for H₂S Service", EFC 17, 2^{nd} Edition (2002), 8.6.2 (p. 39). Specifically, a four-point bending test specimen was taken from the inner surface of a steel pipe after girth welding, where the welded portion extended perpendicularly to the longitudinal direction of the test specimen and the welded portion was located in the middle of the specimen as determined along its longitudinal direction without having been treated in any way. The four-point bending test specimen was set on the test jig in such a manner that tensile stress was applied to the inner surface of the test specimen, and SCC testing was conducted.

Specifically, each test specimen was placed in an autoclave filled with CO₂ at 10 atm, and a stress with the magnitude equal to its actual yield stress (0.2 % proof strength) was applied thereto and, with this state being kept, immersed in a test solution. The test solution was a 25 mass % NaCl aqueous solution, and the test temperature was 120 °C. After 720 hours, a cut surface of an HAZ was observed with optical microscopy to determine whether there were cracks and pits. The results are shown in Table 3 above.

"Good" in the column "SCC test" in Table 3 means that neither cracks nor pits were found in the SCC test. "Poor" means that cracks or pits were found.

In each of the steel pipes labeled Example Characters A to M, P and U to X, the chemical composition was appropriate, the number density of alumina-based inclusions was not higher than 50.0 inclusions/mm², and the Cr-O/Fe-O ratio at the surface was not lower than 0.30. The welded joints fabricated from these steel pipes had good SCC test results.

In the welded joint fabricated from the steel pipe labeled Example Character N, cracking occurred in the SCC test. This is presumably because the Mo content of steel 4 was too low.

In the welded joint fabricated from the steel pipe labeled Example Character O, cracking occurred in the SCC test. This is presumably because the Cr content of steel 5 was too low.

In the welded joints fabricated from the steel pipes labeled Example Characters Q, R and S, cracking occurred in the SCC test even through the chemical compositions of the steel pipes were appropriate. This is presumably because the number densities of alumina-based inclusions of these steel pipes were too high.

The high number density of alumina-based inclusions of the steel pipe labeled Example Character Q is presumably due to inappropriate VOD conditions.

The high number density of alumina-based inclusions of the steel pipe labeled Example Character R is presumably due to the fact that neither VOD nor RH vacuum degassing was performed.

The high number density of alumina-based inclusions of the steel pipe labeled Example Character S is presumably due to inappropriate conditions for RH vacuum degassing.

In the welded joint fabricated from the steel pipe labeled Example Character T, cracking occurred in the SCC test even though the steel pipe had the same chemical composition as the steel pipes labeled Example Characters A to K. This is presumably because the Cr-O/Fe-O ratio at the surface of the steel pipe labeled Example Character T was low.

The low Cr-O/Fe-O ratio at the surface of the steel pipe labeled Example Character T is presumably due to the fact that the pickling with nitric hydrofluoric acid was not performed.

In the welded joint fabricated from the steel pipe labeled Example Character Y, cracking occurred in the SCC test even though the steel pipe had the same chemical composition as the steel pipes labeled Example Character A to K and the pickling conditions were the same as for Example Character A. This is presumably because no blasting was performed prior to the pickling.

In the welded joint fabricated from the steel pipe labeled Example Character Z, cracking occurred in the SCC test even though the steel pipe had the same chemical composition as the steel pipes labeled Example Characters A to K. This is presumably because the Cr-O/Fe-O ratio at the surface of the steel pipe labeled Example Character Z was low.

The low Cr-O/Fe-O ratio at the surface of the steel pipe labeled Example Character Z is presumably due to the fact that the pickling with sulfuric acid was not performed.

Embodiments of the present invention have been described. The above-described embodiments are exemplary only, intended to allow the present invention to be carried out.

The present invention is applicable to a martensitic stainless steel pipe, and more preferably applicable to a martensitic stainless seamless steel pipe.

## Claims

1. A martensitic stainless steel pipe having a chemical composition of, in mass %:
0.001 to 0.050 % C;
0.05 to 1.00 % Si;
0.05 to 1.00 % Mn;
up to 0.030 % P;
up to 0.0020 % S;
below 0.50 % Cu;
11.50 to below 14.00 % Cr;
above 5.00 to 7.00 % Ni;
above 1.00 to 3.00 % Mo;
0.02 to 0.50 % Ti;
0.001 to 0.100 % Al;
0.0001 to 0.0040 % Ca;
0.0001 to below 0.0200 % N;
0 to 0.500 %V;
0 to 0.500 % Nb;
0 to 0.500 % Co; and
balance Fe and impurities,
a number density of inclusions having an equivalent circle diameter exceeding 1.0 µm and containing Al in not less than 20 mass % and O in not less than 20 mass % being not higher than 50.0 inclusions/mm²,
an atomic concentration ratio of Cr oxides to Fe oxides obtained by X-ray photoelectron spectroscopic analysis against a surface of the martensitic stainless steel pipe, Cr-O/Fe-O, as measured according to the method described in the description, being not lower than 0.30.

2. The martensitic stainless steel pipe according to claim 1, wherein the atomic concentration ratio Cr-O/Fe-O is not higher than 1.50.

3. The martensitic stainless steel pipe according to claim 1 or 2, wherein the chemical composition contains one or more elements selected from the group consisting of, in mass %:
0.001 to 0.500 % V;
0.001 to 0.500 % Nb; and
0.001 to 0.500 % Co.

4. The martensitic stainless steel pipe according to any one of claims 1 to 3, wherein the martensitic stainless steel pipe is for line pipe.

5. The martensitic stainless steel pipe according to any one of claims 1 to 4, wherein the martensitic stainless steel pipe is seamless pipe.

6. A method of manufacturing the martensitic stainless steel pipe according to claim 5, comprising:
preparing steel melt;
subjecting the steel melt to secondary refining;
casting the steel melt that has undergone the secondary refining, or casting the steel melt that has undergone the secondary refining and then further hot working the steel melt, so as to produce a billet having a chemical composition of, in mass %: 0.001 to 0.050 % C; 0.05 to 1.00 % Si; 0.05 to 1.00 % Mn; up to 0.030 % P; up to 0.0020 % S; below 0.50 % Cu; 11.50 to below 14.00 % Cr; above 5.00 to 7.00 % Ni; above 1.00 to 3.00 % Mo; 0.02 to 0.50 % Ti; 0.001 to 0.100 % Al; 0.0001 to 0.0040 % Ca; 0.0001 to below 0.0200 % N; 0 to 0.500 % V; 0 to 0.500 % Nb; 0 to 0.500 % Co; and balance Fe and impurities;
heating the billet, for 20 minutes to 10 hours, in a furnace heated to 1100 °C or higher, and then piercing the billet;
rolling the pierced billet to produce a hollow shell;
quenching the hollow shell;
tempering the quenched hollow shell at a temperature not higher than an Ac₁ point for 10 to 180 minutes;
blasting the tempered hollow shell;
pickling, with sulfuric acid, the blasted hollow shell; and
pickling, with nitric hydrofluoric acid, the hollow shell that has been pickled with sulfuric acid,
the secondary refining including one of the following sub-steps, A) and B):
A) performing VOD, for 10 minutes or longer, to supply oxygen to the steel melt in a vacuum chamber with a pressure reduced to 1333.2 Pa (10 torr) or lower; and
B) performing RH vacuum degassing, for 5 minutes or longer, to circulate the steel melt between a vacuum vessel with a pressure reduced to 1333.2 Pa (10 torr) or lower and a ladle,
wherein the quenching includes any one of the following sub-steps, C1), D1), and E1):
C1) cooling the hollow shell directly after the rolling from a temperature not lower than an Ar₃ point;
D1) holding the hollow shell directly after the rolling in a supplementary-heating furnace at a temperature not lower than an Ac₃ point for 1 to 60 minutes, and then cooling the hollow shell; and
E1) cooling the hollow shell directly after the rolling and then holding the hollow shell in a re-heating furnace at a temperature not lower than an Ac₃ point for 1 to 360 minutes, and then again cooling the hollow shell.

7. The method of manufacturing the martensitic stainless steel pipe according to claim 6, wherein:
the pickling with sulfuric acid includes immersing the hollow shell, for 10 minutes or longer, in a sulfuric acid aqueous solution with a sulfuric acid concentration of 10 to 30 mass % and at a temperature of 40 to 80 °C, and
the pickling with nitric hydrofluoric acid includes immersing the hollow shell, for 1 minute or longer, in a nitric hydrofluoric acid aqueous solution with a mixture ratio between hydrofluoric acid and nitric acid (hydrofluoric acid : nitric acid) of 1:1 to 1:5 in mass ratio, where the entire solution has a concentration of 5 to 30 mass %.

8. The method of manufacturing the martensitic stainless steel pipe according to claim 6 or 7, further comprising:
water washing the hollow shell between the pickling with sulfuric acid and the pickling with nitric hydrofluoric acid;
again water washing the hollow shell that has been pickled with nitric hydrofluoric acid;
high-pressure water washing the hollow shell that has been water washed again;
hot-water immersing the hollow shell that has been high-pressure water washed; and
gas spraying the hollow shell that has been hot-water immersed.

9. The method of manufacturing the martensitic stainless steel pipe according to any one of claims 6 to 8, wherein the quenching includes any one of the following sub-steps, C) to E):
C) cooling the hollow shell directly after the rolling from a temperature not lower than an Ar₃ point;
D) holding the hollow shell directly after the rolling in a supplementary-heating furnace at 800 to 1100 °C for 1 to 60 minutes and then cooling the hollow shell; and
E) cooling the hollow shell directly after the rolling and then holding the hollow shell in a re-heating furnace at 800 to 1100 °C for 1 to 360 minutes, and then again cooling the hollow shell.

10. The method of manufacturing the martensitic stainless steel pipe according to any one of claims 6 to 9, wherein the tempering includes holding the hollow shell in a tempering furnace at 500 to 700 °C for 10 to 180 minutes.

## Patentansprüche

1. Martensitisches Rohr aus nicht rostendem Stahl mit einer chemischen Zusammensetzung von, in Masse-%:
0,001 bis 0,050 % C;
0,05 bis 1,00 % Si;
0,05 bis 1,00 % Mn;
bis zu 0,030 % P;
bis zu 0,0020 % S;
unter 0,50 % Cu;
11,50 bis unter 14,00 % Cr;
über 5,00 bis 7,00 % Ni;
über 1,00 bis 3,00 % Mo;
0,02 bis 0,50 % Ti;
0,001 bis 0,100 % Al;
0,0001 bis 0,0040 % Ca;
0,0001 bis unter 0,0200 % N;
0 bis 0,500 % V;
0 bis 0,500 % Nb;
0 bis 0,500 % Co; und
Rest Fe und Verunreinigungen,
eine Anzahldichte von Einschlüssen, die einen äquivalenten Kreisdurchmesser aufweist, der 1,0 µm nicht überschreitet, und die nicht weniger als 20 Masse-% Al und nicht weniger als 20 Masse-% O enthält, nicht größer als 50,0 Einschlüsse/mm² ist,
ein atomares Konzentrationsverhältnis von Cr-Oxiden zu Fe-Oxiden, das durch röntgenfotoelektronenspektroskopische Analyse gegen eine Oberfläche des martensitischen Rohrs aus nicht rostendem Stahl erhalten wird, Cr-O/Fe-O, gemessen gemäß dem in der Beschreibung beschriebenen Verfahren, nicht weniger als 0,30 ist.

2. Martensitisches Rohr aus nicht rostendem Stahl nach Anspruch 1, wobei das atomare Konzentrationsverhältnis Cr-O/Fe-O nicht höher als 1,50 ist.

3. Martensitisches Rohr aus nicht rostendem Stahl nach Anspruch 1 oder 2, wobei die chemische Zusammensetzung ein oder mehrere Elemente enthält, die aus der Gruppe ausgewählt sind, bestehend aus, in Masse-%:
0,001 bis 0,500 % V;
0,001 bis 0,500 % Nb; und
0,001 bis 0,500 % Co.

4. Martensitisches Rohr aus nicht rostendem Stahl nach einem der Ansprüche 1 bis 3, wobei das martensitische Rohr aus nicht rostendem Strahl für Leitungsrohre bestimmt ist.

5. Martensitisches Rohr aus nicht rostendem Stahl nach einem der Ansprüche 1 bis 4, wobei das martensitische Rohr aus nicht rostendem Stahl ein nahtloses Rohr ist.

6. Verfahren zum Herstellen des martensitischen Rohrs aus nicht rostendem Stahl nach Anspruch 5, umfassend:
Herstellen einer Stahlschmelze;
Unterziehen der Stahlschmelze einer Sekundärraffination;
Gießen der Stahlschmelze, die der Sekundärraffination unterzogen wurde, oder Gießen der Stahlschmelze, die der Sekundärraffination unterzogen wurde, und anschließendes weiteres Warmumformen der Stahlschmelze, um einen Block mit einer chemischen Zusammensetzung von, in Masse-%: 0,001 bis 0,050 % C; 0,05 bis 1,00 % Si; 0,05 bis 1,00 % Mn; bis zu 0,030 % P; bis zu 0,0020 % S; unter 0,50 % Cu; 11,50 bis unter 14,00 % Cr, über 5,00 bis 7,00 % Ni; über 1,00 bis 3,00 % Mo; 0,02 bis 0,50 % Ti; 0,001 bis 0,100 % Al; 0,0001 bis 0,0040 % Ca; 0,0001 bis unter 0,0200 % N; 0 bis 0,500 % V; 0 bis 0,500 % Nb; 0 bis 0,500 % Co; und Rest Fe und Verunreinigungen;
Erhitzen des Blocks für 20 Minuten bis 10 Stunden in einem auf 1100 °C oder höher erhitzten Ofen und anschließendes Lochen des Blocks;
Walzen des gelochten Blocks, um einen hohlen Mantel zu produzieren;
Abschrecken des hohlen Mantels;
Tempern des abgeschreckten hohlen Mantels bei einer Temperatur, die nicht höher ist als der Ac₁-Punkt, für 10 bis 180 Minuten;
Strahlen des getemperten hohlen Mantels;
Beizen des gestrahlten hohlen Mantels mit Schwefelsäure; und
Beizen des hohlen Mantels, der mit Schwefelsäure gebeizt worden ist, mit salpetersaurer Flusssäure,
wobei die Sekundärraffination einen der folgenden Teilschritte A) und B) beinhaltet:
A) Durchführen von VOD, für 10 Minuten oder länger, um der Stahlschmelze in einer Vakuumkammer mit einem auf 1333,2 Pa (10 Torr) oder niedriger reduzierten Druck zuzuführen; und
B) Durchführen einer RH-Vakuumentgasung für 5 Minuten oder länger, um die Stahlschmelze zwischen einem Vakuumbehälter mit einem auf 1333,2 Pa (10 Torr) oder niedriger reduzierten Druck und einer Pfanne zirkulieren zu lassen,
wobei das Abschrecken einen der folgenden Teilschritte, C1), D1) und E1), beinhaltet:
C1) Abkühlen des hohlen Mantels direkt nach dem Walzen von einer Temperatur, die nicht niedriger als ein Ar₃-Punkt ist,
D1) Halten des hohlen Mantels direkt nach dem Walzen in einem Zusatzheizofen bei einer Temperatur, die nicht niedriger als ein Ac₃-Punkt ist, für 1 bis 60 Minuten und anschließendes Abkühlen des hohlen Mantels; und
E1) Abkühlen des hohlen Mantels unmittelbar nach dem Walzen und anschließendes Halten des hohlen Mantels in einem Nachwärmofen bei einer Temperatur, die nicht niedriger ist als ein Ac₃-Punkt ist, für 1 bis 360 Minuten und anschließendes erneutes Abkühlen des hohlen Mantels.

7. Verfahren zum Herstellen des martensitischen Rohrs aus rostfreiem Stahl nach Anspruch 6, wobei:
das Beizen mit Schwefelsäure ein Eintauchen des hohlen Mantels für 10 Minuten oder länger in eine wässrige Schwefelsäurelösung mit einer Schwefelsäurekonzentration von 10 bis 30 Masse-% und bei einer Temperatur von 40 bis 80 °C beinhaltet, und
das Beizen mit salpetersaurer Flusssäure das Eintauchen des hohlen Mantels für 1 Minute oder länger in eine wässrige salpetersaure Flusssäurelösung mit einem Mischungsverhältnis zwischen Flusssäure und Salpetersäure (Flusssäure : Salpetersäure) von 1 : 1 bis 1 : 5 im Massenverhältnis beinhaltet, wobei die gesamte Lösung eine Konzentration von 5 bis 30 Massen-% aufweist.

8. Verfahren zum Herstellen des martensitischen Rohrs aus nicht rostendem Stahl nach Anspruch 6 oder 7, ferner umfassend:
Waschen des hohlen Mantels mit Wasser zwischen dem Beizen mit Schwefelsäure und dem Beizen mit salpetersaurer Flusssäure;
erneutes Waschen des hohlen Mantels mit Wasser, die mit salpetersaurer Flusssäure gebeizt worden ist,
Waschen des hohlen Mantels mit Hochdruckwasser, der erneut mit Wasser gewaschen wurde;
Heißwassertauchen des hohlen Mantels, der mit Hochdruckwasser gewaschen wurde; und
Gassprühen des hohlen Mantels, der heißwassergetaucht wurde.

9. Verfahren zum Herstellen des martensitischen Rohrs aus nicht rostendem Stahl nach einem der Ansprüche 6 bis 8, wobei das Abschrecken einen der folgenden Teilschritte C) bis E) beinhaltet:
C) Abkühlen des hohlen Mantels direkt nach dem Walzen von einer Temperatur, die nicht niedriger als ein Ar₃-Punkt ist,
D) Halten des hohlen Mantels direkt nach dem Walzen in einem Zusatzheizofen bei 800 bis 1100 °C für 1 bis 60 Minuten und anschließendes Abkühlen des hohlen Mantels; und
E) Abkühlen des hohlen Mantels unmittelbar nach dem Walzen und anschließendes Halten des hohlen Mantels in einem Nachwärmofen bei 800 bis 1100 °C für 1 bis 360 Minuten und anschließendes erneutes Abkühlen des hohlen Mantels.

10. Verfahren zum Herstellen eines martensitischen Rohrs aus nicht rostendem Stahl nach einem der Ansprüche 6 bis 9, wobei das Tempern das Halten des hohlen Mantels in einem Temperofen bei 500 bis 700 °C für 10 bis 180 Minuten beinhaltet.

## Revendications

1. Tuyau en acier inoxydable martensitique ayant une composition chimique de, en % en masse :
0,001 à 0,050 % de C ;
0,05 à 1,00 % de Si ;
0,05 à 1,00 % de Mn ;
au plus 0,030 % de P ;
au plus 0,0020 % de S ;
moins de 0,50 % de Cu ;
11,50 à moins de 14,00 % de Cr ;
plus de 5,00 à 7,00 % de Ni ;
plus de 1,00 à 3,00 % de Mo ;
0,02 à 0,50 % de Ti ;
0,001 à 0,100 % d'Al;
0,0001 à 0,0040 % de Ca ;
0,0001 à moins de 0,0200 % de N ;
0 à 0,500 % de V ;
0 à 0,500 % de Nb ;
0 à 0,500 % de Co ; et
le reste étant Fe et des impuretés,
un nombre volumique d'inclusions ayant un diamètre de cercle équivalent dépassant 1,0 µm et contenant Al en non moins de 20 % en masse et O en non moins de 20 % en masse n'étant pas supérieur à 50,0 inclusions/mm²,
un rapport de concentration atomique d'oxydes de Cr par rapport à des oxydes de Fe, obtenu par analyse spectroscopique de photoélectrons X contre une surface du tuyau en acier inoxydable martensitique, Cr-O/Fe-O, tel que mesuré selon le procédé décrit dans la description, n'étant pas inférieur à 0,30.

2. Tuyau en acier inoxydable martensitique selon la revendication 1, dans lequel le rapport de concentration atomique Cr-O/Fe-O n'est pas supérieur à 1,50.

3. Tuyau en acier inoxydable martensitique selon la revendication 1 ou 2, dans lequel la composition chimique contient un ou plusieurs éléments sélectionnés parmi le groupe constitué de, en % en masse :
0,001 à 0,500 % de V ;
0,001 à 0,500 % de Nb ; et
0,001 à 0,500 % de Co.

4. Tuyau en acier inoxydable martensitique selon l'une quelconque des revendications 1 à 3, dans lequel le tuyau en acier inoxydable martensitique est pour un tuyau de conduite.

5. Tuyau en acier inoxydable martensitique selon l'une quelconque des revendications 1 à 4, dans lequel le tuyau en acier inoxydable martensitique est un tuyau sans couture.

6. Procédé de fabrication du tuyau en acier inoxydable martensitique selon la revendication 5, comprenant :
la préparation d'une coulée d'acier ;
la réalisation d'un affinage secondaire de la coulée d'acier ;
le coulage de la coulée d'acier dont l'affinage secondaire a été réalisé, ou le coulage de la coulée d'acier dont l'affinage secondaire a été réalisé et puis en outre le formage à chaud de la coulée d'acier, afin de produire une billette ayant une composition chimique de, en % en masse : 0,001 à 0,050 % de C ; 0,05 à 1,00 % de Si ; 0,05 à 1,00 % de Mn ; au plus 0,030 % de P ; au plus 0,0020 % de S ; moins de 0,50 % de Cu ; 11,50 à moins de 14,00 % de Cr ; plus de 5,00 à 7,00 % de Ni ; plus de 1,00 à 3,00 % de Mo ; 0,02 à 0,50 % de Ti ; 0,001 à 0,100 % d'Al ; 0,0001 à 0,0040 % de Ca ; 0,0001 à moins de 0,0200 % de N ; 0 à 0,500 % de V ; 0 à 0,500 % de Nb ; 0 à 0,500 % de Co ; et le reste étant Fe et des impuretés ;
le chauffage de la billette, pendant 20 minutes à 10 heures, dans un four chauffé jusqu'à 1100 °C ou plus, et puis le perçage de la billette ;
le laminage de la billette percée pour produire une coquille creuse ;
la trempe de la coquille creuse ;
le revenu de la coquille creuse trempée, à une température non supérieure à un point Ac₁ pendant 10 à 180 minutes ;
le sablage de la coquille creuse revenue ;
le décapage, avec de l'acide sulfurique, de la coquille creuse sablée ; et
le décapage, avec de l'acide hydrofluorique nitrique, de la coquille creuse qui a été décapée avec de l'acide sulfurique,
l'affinage secondaire incluant une des sous-étapes suivantes, A) et B) :
A) la réalisation de VOD, pendant 10 minutes ou plus, pour fournir de l'oxygène à la coulée d'acier dans une chambre sous vide avec une pression réduite à 1333,2 Pa (10 torr) ou moins ; et
B) la réalisation de dégazage sous vide RH, pendant 5 minutes ou plus, pour faire circuler la coulée d'acier entre un cuve sous vide avec une pression réduite à 1333,2 Pa (10 torr) ou moins et une poche,
dans lequel la trempe inclut l'une quelconque des sous-étapes suivantes, C1, D1, et E1) :
C1) le refroidissement de la coquille creuse directement après le laminage, à partir d'une température non inférieure à un point Ar₃,
D1) le maintien de la coquille creuse, directement après le laminage, dans un four de chauffage supplémentaire à une température non inférieure à un point Ac₃ pendant 1 à 60 minutes, et puis le refroidissement de la coquille creuse ; et
E1) le refroidissement de la coquille creuse, directement après le laminage, et puis le maintien de la coquille creuse dans un four de rechauffage à une température non inférieure à un point Ac₃ pendant 1 à 360 minutes, et puis à nouveau le refroidissement de la coquille creuse.

7. Procédé de fabrication du tuyau en acier inoxydable martensitique selon la revendication 6, dans lequel :
le décapage avec de l'acide sulfurique inclut l'immersion de la coquille creuse, pendant 10 minutes ou plus, dans une solution aqueuse d'acide sulfurique avec une concentration en acide sulfurique de 10 à 30 % en masse et à une température de 40 à 80 °C, et
le décapage avec de l'acide hydrofluorique nitrique inclut l'immersion de la coquille creuse, pendant 1 minute ou plus, dans une solution aqueuse d'acide hydrofluorique nitrique avec un rapport de mélange entre l'acide hydrofluorique et l'acide nitrique (acide hydrofluorique : acide nitrique) de 1 : 1 à 1 : 5 en rapport en masse, où la solution entière a une concentration de 5 à 30 % en masse.

8. Procédé de fabrication du tuyau en acier inoxydable martensitique selon la revendication 6 ou 7, comprenant en outre :
le lavage à l'eau de la coquille creuse, entre le décapage avec de l'acide sulfurique et le décapage avec de l'acide hydrofluorique nitrique ;
à nouveau le lavage à l'eau de la coquille creuse qui a été décapée avec de l'acide hydrofluorique nitrique ;
le lavage à l'eau à haute pression de la coquille creuse qui a été lavée à l'eau à nouveau,
l'immersion en eau chaude de la coquille creuse qui a été lavée à l'eau à haute pression, et
la pulvérisation gazeuse de la coquille creuse qui a été immergée en eau chaude.

9. Procédé de fabrication du tuyau en acier inoxydable martensitique selon l'une quelconque des revendications 6 à 8, dans lequel la trempe inclut l'une quelconque des sous-étapes suivantes, C) à E) :
C) le refroidissement de la coquille creuse, directement après le laminage, à partir d'une température non inférieure à un point Ar₃,
D) le maintien de la coquille creuse, directement après le laminage, dans un four de chauffage supplémentaire à 800 à 1100 °C pendant 1 à 60 minutes, et puis le refroidissement de la coquille creuse ; et
E) le refroidissement de la coquille creuse, directement après le laminage, et puis le maintien de la coquille creuse dans un four de rechauffage à 800 à 1100 °C pendant 1 à 360 minutes, et puis à nouveau le refroidissement de la coquille creuse.

10. Procédé de fabrication du tuyau en acier inoxydable martensitique selon l'une quelconque des revendications 6 à 9, dans lequel le revenu inclut le maintien de la coquille creuse dans un four de revenu à 500 à 700 °C pendant 10 à 180 minutes.
